# NEUE EUROPÄISCHE PATENTSCHRIFT

(11) **EP 2 862 694 B2**
(45) Veröffentlichungstag und Bekanntmachung des Hinweises auf die Entscheidung über den Einspruch: **07.04.2021**
(45) Hinweis auf die Patenterteilung: 07.06.2017
(21) Anmeldenummer: 14189518.5
(22) Anmeldetag: 20.10.2014
(51) Int. Cl.: B29C 49/42

(54) **Vorrichtung und Verfahren zum Erwärmen von Kunststoffvorformlingen mit motorisch gesteuerten Halteelementen für die Kunststoffvorformlinge**
Method and device for heating plastic pre-forms with motorised retention elements for the plastic pre-forms
Dispositif et procédé destinés au chauffage d'ébauches en plastique avec éléments de retenue motorisés pour les ébauches en plastique

(30) Priorität: 18.10.2013 DE 102013111528
(43) Veröffentlichungstag der Anmeldung: 22.04.2015
(73) Patentinhaber: Krones AG, 93073 Neutraubling (DE)
(72) Erfinder: Hüttner, Gerald, 93073 Neutraubling (DE); Voth, Klaus, 93073 Neutraubling (DE)
(74) Vertreter: Bittner, Bernhard

(56) Entgegenhaltungen:
- EP-A1- 2 594 495
- EP-A1- 2 612 744
- EP-A1- 2 684 673
- EP-A1- 2 743 057
- EP-A1- 2 754 545
- WO-A1-2006/047260
- DE-A1-102010 018 154
- US-A1- 2004 047 941
- US-A1- 2010 052 224
- US-A1- 2011 135 288
- US-A1- 2012 038 090

## Beschreibung

Die vorliegende Erfindung bezieht sich auf eine Vorrichtung und ein Verfahren zum Erwärmen von Kunststoffvorformlingen. Derartige Vorrichtungen und Verfahren sind aus dem Stand der Technik seit langem bekannt. Üblicherweise werden dabei Kunststoffvorformlinge zunächst in diesen Vorrichtungen erwärmt, um anschließend in Umformungseinrichtungen, beispielsweise mittels eines Blasrads einer Streckblasmaschine, zu Kunststoffbehältnissen, wie beispielsweise Kunststoffflaschen, umgeformt werden zu können. Bei derartigen Öfen ist es bekannt, dass mittels einer Transporteinrichtung, wie etwa einer Transportkette, die Kunststoffvorformlinge durch Heiztunnel bzw. Heizgassen gefördert werden und während dieses Transports erwärmt werden. Dabei ist es im Stand der Technik auch bekannt, dass die Kunststoffvorformlinge während dieser Erwärmung um ihre eigene Längsachse gedreht werden. Auf diese Weise kann eine gleichmäßigere Erwärmung der Kunststoffvorformlinge erreicht werden.

Im Stand der Technik wird diese Drehung üblicherweise dadurch bewirkt, dass die Kunststoffvorformlinge etwa mit einem Zahnrad gekoppelt sind, welches an einer stationären Verzahnung vorbeiläuft, um so die Drehung zu erreichen (siehe z.B. US-A-2004/0047941, EP-A-2 612 744 oder WO-A-2006/047260). Diese Vorgehensweise hat sich bewährt, ist jedoch nicht in allen Bereichen zufriedenstellend, insbesondere wenn aus unterschiedlichen Gründen eine variable Drehung der Kunststoffvorformlinge gewünscht ist, beispielsweise wenn Drehungsdifferenzen erzeugt werden sollen oder wenn beispielsweise die Kunststoffvorformlinge unterschiedlich gedreht werden sollen. Letzteres hat den Vorteil, unterschiedliche bzw. individuelle Temperaturprofile auf die Kunststoffvorformlinge auftragen zu können. Aus der US 2010/0052224 A1 ist ein Verfahren und eine Vorrichtung zum Erwärmen von Vorformlingen mittels Mikrowellen bekannt. Aus der US2012/0038090 A1 ist eine Vorrichtung zum Erwärmen von Preforms bekannt, welche einen Sterilraum aufweist. Die DE 299 16 315 U1 beschreibt eine Vorrichtung zum thermischen Konditionieren, wobei eine Kühleinrichtung für die Preforms vorgesehen ist.

Der vorliegenden Erfindung liegt daher die Aufgabe zugrunde, die Variabilität für derartige Vorrichtungen zu erhöhen.

Eine weitere der Erfindung zugrunde liegende Aufgabe liegt darin, eine Vorrichtung zu schaffen, bei der stehende Kurven nach Möglichkeit reduziert werden können.

Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Eine Vorrichtung zum Erwärmen von Kunststoffvorformlingen weist eine Transporteinrichtung auf, welche die Kunststoffvorformlinge entlang eines vorgegebenen Transportpfades transportiert. Weiterhin weist die Transporteinrichtung ein umlaufendes Transportmittel auf, und an diesem umlaufenden Transportmittel ist eine Vielzahl von Halteelementen zum Halten der Kunststoffvorformlinge angeordnet. Dabei sind diese Halteelemente bezüglich einer Längsrichtung der zu drehenden Kunststoffvorformlinge drehbar und bewegbar. Dabei sind diesen Halteelementen jeweils unabhängig voneinander steuerbare Antriebseinrichtungen zugeordnet, welche zumindest auch die Drehbewegung der Kunststoffvorformlinge bezüglich deren Längsrichtung bewirken.

Während im Stand der Technik die Drehbewegung aller Kunststoffvorformlinge einheitlich erzeugt wird, etwa durch einen Riemenantrieb, und die Hubbewegung der Kunststoffvorformlinge durch eine stehende Kurve erzeugt wird, wird nunmehr vorgeschlagen, dass den einzelnen Halteelementen jeweils separate Antriebseinrichtungen zugeordnet sind. Vorteilhaft weisend diese Antriebseinrichtungen jeweils einen Stator und einen Läufer auf. Dabei ist vorteilhaft der Stator dieser Antriebseinrichtungen an dem besagten Transportmittel angeordnet. Bei diesem Transportmittel kann es sich beispielsweise um eine umlaufende Kette oder dergleichen handeln.

Weiterhin ist es auch möglich, dass ein Stator dieser Antriebseinrichtungen in das Transportmittel integriert ist, beispielsweise jeweils in die einzelnen Kettenglieder einer Transportkette integriert ist. Vorteilhaft ist das Halteelement mit dem Läufer der Antriebseinrichtung gekoppelt, wobei besonders bevorzugt das Halteelement einteilig mit diesem Läufer ausgebildet ist.

Vorteilhaft handelt es sich bei dem Halteelement um einen Haltedorn, der in eine Mündung der Behältnisse bzw. Kunststoffvorformlinge einführbar ist, und diese daher von innen hält. Bevorzugt ist das Halteelement mit dem Läufer gekoppelt.

Bei einer weiteren vorteilhaften Ausführungsform ist an den Halteelementen auch jeweils ein Abschirmelement angeordnet, welches Wärme gegenüber solchen Bereichen der Kunststoffvorformlinge, die nicht erwärmt werden sollen, abschirmt. Dabei sollen insbesondere die Gewinde bzw. Mündungsbereiche der Kunststoffvorformlinge geschützt werden.

Bei einer weiteren vorteilhaften Ausführungsform weist der Transportpfad der Kunststoffvorformlinge Abschnitte mit unterschiedlichen Krümmungen auf. So können beispielsweise geradlinige Abschnitte vorgesehen sein, entlang derer die Kunststoffvorformlinge transportiert werden sowie auch gekrümmte Abschnitte. An diesen gekrümmten Abschnitten kann beispielsweise eine Bewegungsrichtung der Kunststoffvorformlinge umgekehrt werden, das heißt die gekrümmten Abschnitte können einen Gesamtwinkel von 180°aufweisen.

Bei einer weiteren vorteilhaften Ausführungsform weisen die Antriebseinrichtungen jeweils Elektromotoren auf. Dabei kann beispielsweise der Stator dieser Elektromotoren an dem Transportmittel, wie einer Transportkette, angeordnet sein und an dem Rotor wiederum kann das Halteelement zum Halten der Kunststoffvorformlinge angeordnet sein.

Bevorzugt sind also die Halteelemente jeweils mit elektrischen Antrieben versehen. Wie erwähnt, kann es sich hierbei um Elektromotoren im klassischen Sinne handeln. Dabei ermöglichen jedoch diese Antriebseinrichtungen auch eine Bewegung der Halteelemente in der Längsrichtung der Kunststoffvorformlinge. Auf diese Weise kann bei der Übergabe der Kunststoffvorformlinge der Haltedorn insbesondere in die Mündungen der Kunststoffvorformlinge einfahren und kann auch am Ende des Erwärmungsvorgangs wieder aus den Mündungen der Kunststoffvorformlinge herausgezogen werden. Bevorzugt kann es sich bei der Antriebseinrichtung auch um einen Linearantrieb handeln, der auch eine Rotationsbewegung durchführt. Dabei kann dieser Linearantrieb einen Läufer und einen Stator aufweisen, wobei sich der Stator bevorzugt in einem Gehäuse befindet und bevorzugt in einem Kettenglied angeordnet ist.

Durch eine Änderung der Bewegungsgeschwindigkeit in der Längsrichtung der Kunststoff kann bevorzugt ein Temperaturprofil in der Längsrichtung der Kunststoffvorformlinge erzeugt werden.

Bei einer weiteren vorteilhaften Ausführungsform weist die Vorrichtung eine Kühleinrichtung zum Kühlen des Transportmittels und/oder der Antriebseinrichtungen auf. So kann eine Kühleinrichtung vorgesehen sein, welche aktiv oder passiv eine Kühlung des Transportmittels und/oder der Antriebseinrichtung bewirkt. Beispielsweise kann das Transportmittel als Transportkette mit einer Vielzahl von Kettengliedern ausgeführt sein. Dabei können die einzelnen Kettenglieder beispielsweise aus Metall, beispielsweise aus Aluminium hergestellt sein, welches geeignet ist, um Wärme in günstiger Weise abzuführen, insbesondere aber nicht ausschließlich über Kühlrippen. Vorteilhaft wird das Transportmittel mit einem gasförmigen Medium und insbesondere mit kalter Luft gekühlt. Bei dem Transportmittel kann es sich jedoch auch um ein drehbares Rad handeln.

Auch wäre es möglich, dass die Kühleinrichtung eine Flüssigkeit zum Kühlen einsetzt. So kann beispielsweise die Wärme, die die Antriebseinrichtung erzeugt, abgeführt werden, beispielsweise mithilfe eines Schwertes, welches beispielsweise an den Kühlrippen angeordnet ist und welches in einer Kühlflüssigkeit läuft. Auf diese Weise kann die erzeugte Wärme auch über diese Kühlflüssigkeit abgeleitet werden.

Um weiterhin die Infrarotstrahlung der Heizeinrichtungen fernzuhalten, kann auch unterhalb, bzw. zwischen dem Transportmittel und den einzelnen Heizeinrichtungen, bei denen es sich insbesondere, aber nicht ausschließlich um Infrarotstrahler handelt, eine Abschirmeinrichtung, wie beispielsweise ein Abschirmblech, vorgesehen sein. Dabei ist es möglich, dass jedem einzelnen Halteelement und/oder jeder einzelnen Halteeinrichtung eine derartige Abschirmeinrichtung zugeordnet ist. Dabei ist es auch möglich, dass diese Abschirmeinrichtungen einzeln an Kettengliedern des Transportmittels angeordnet sind. Daneben könnte es sich jedoch bei dem Transportmittel auch um ein umlaufendes Transportband oder dergleichen handeln.

Bei einer weiteren vorteilhaften Ausführungsform wird ein Stator der Antriebseinrichtung über das Transportmittel und insbesondere über ein Kettenglied gekühlt. Wie oben erwähnt, ist das Transportmittel bevorzugt aus einem Metall, wie insbesondere Aluminium, hergestellt. Es wäre jedoch auch möglich, dass das Transportmittel aus einem anderen Material und insbesondere einem Kunststoff hergestellt ist.

Bei einer weiteren vorteilhaften Ausführungsform ist eine Steuerungseinrichtung zum Steuern der Antriebseinrichtungen vorgesehen. Bevorzugt weist jede Antriebseinrichtung eine ihr zugeordnete Steuerungseinrichtung auf und besonders bevorzugt weist auch jede Antriebseinrichtung eine eigene Stromversorgung auf. So kann beispielsweise für jedes Halteelement bzw. für jedes Kettenglied eine eigene Stromversorgung vorgesehen sein, die besonders bevorzugt über Schleifkontakte erfolgen kann. So kann beispielsweise ein stationärer Träger vorgesehen sein, der zur Stromzuführung dient. Dabei wäre es möglich, dass in diesem Träger die Zuführungen für zwei Kontakte bzw. zwei Pole der Stromzuführung integriert sind.

Bei einer weiteren vorteilhaften Ausführungsform ist, wie oben erwähnt, das Transportmittel eine Transportkette.

Bei einer weiteren vorteilhaften Ausführungsform weist jede Antriebseinrichtung eine Decodereinrichtung und insbesondere einen Digitaldecoder auf. Dieser Digitaldecoder dient vorteilhaft dazu, um die Drehzahl und/oder den Hub der jeweiligen Läufer der einzelnen Antriebseinrichtungen zu steuern. Bevorzugt werden diese einzelnen Digitaldecoder über eine Steuereinrichtung angesteuert. Dabei ist es möglich, dass ein Steuersignal zur Ansteuerung der Digitaldecoder auch über die oben erwähnte Stromleitung oder eine andere Stromleitung den einzelnen Digitaldecodern zugeleitet wird. Damit ist es bevorzugt möglich, dass Steuersignale über eine Stromaufnahme übertragen werden.

Bei einer bevorzugten Ausführungsform ist dieser Digitaldecoder in einer Ausnehmung angeordnet. So kann beispielsweise ein Kettenglied eine Ausnehmung aufweisen, in welcher der besagte Digitaldecoder angeordnet ist.

Dabei ist es auch möglich, dass dieser Digitaldecoder in eine Vertiefung eingebracht ist und diese wiederum bevorzugt mit einem Verschlusselement, beispielsweise einer Kunststoffmasse verschlossen ist.

Vorteilhaft besteht zwischen dem Digitaldecoder und der diesem zugeordneten Antriebseinrichtung eine Verbindungseinrichtung und insbesondere eine Leitungsverbindung (wie etwa ein Kabel).

Dabei kann es sich bei dieser Verbindungsleitung um eine Steckverbindung (z.B. eine Büchse oder ein Seil) handeln, sodass es möglich ist, beispielsweise zu Reparaturzwecken, die Antriebseinrichtung von dem Transportmittel, wie beispielsweise einem Kettenglied, zu entfernen.

Weiterhin wäre es möglich, dass dieser Digitaldecoder und die Antriebseinrichtung auch über einen Schleifkontakt in Verbindung stehen und/oder der Digitaldecoder mit einem Schleifkontakt über ein Kabel verbunden ist. Weiterhin wäre es möglich, dass jeder einzelne Digitaldecoder, der jeweils einer Antriebseinrichtung zugeordnet ist, von einer zentralen Steuereinheit gesteuert wird. Auch hier kann wieder eine Steuereinheit vorgesehen sein, so dass bevorzugt auch die Decodereinrichtung von dem Transportmittel demontierbar ist. Daneben wäre es jedoch auch möglich, dass jeder einzelne Digitaldecoder einzeln angesteuert wird. Auf diese Weise können auch unterschiedliche Drehzahlen der einzelnen Kunststoffvorformlinge eingestellt werden.

Auch hinsichtlich der Drehungen der Kunststoffvorformlinge ist man aufgrund der Erfindung relativ frei. So wäre es möglich, dass alle Halteelemente ab einem bestimmten Punkt ihres Umlaufs wiederholende Bewegungen ausführen. Auch wäre es, wie oben erwähnt, denkbar, dass die Drehzahlen bzw. die Drehbewegungen der einzelnen Halteelemente unterschiedlich sind. Dabei können auch die Drehzahlen und die Drehrichtungen unterschiedlich sein.

Die Halteelemente für die Kunststoffvorformlinge, bzw. die Läufer, können dabei schmiermittellos aufgenommen sein. Bevorzugt werden zur Einleitung der Drehbewegung der einzelnen Halteelemente und/oder zur Erzielung einer Linearbewegung der Halteelemente (insbesondere in einer Längsrichtung der Kunststoffvorformling) keine Führungskurven eingesetzt. Damit erfolgen diese Antriebe vorteilhaft führungskurvenlos.

Bei einer weiteren vorteilhaften Ausführungsform weist die Vorrichtung eine - insbesondere stationär angeordnete - Stromzuführungseinrichtung auf, welche die Antriebseinrichtungen wenigstens zeitweise mit Energie versorgt. Dabei ist es möglich, dass sich an der Umlaufbahn des Transportmittels, beispielsweise einer Kettenlaufbahn, eine entsprechende, insbesondere durchgehende, Stromschiene befindet. Dabei ist es möglich, dass diese Stromschiene einen Kunststoffträger aufweist, in dem beispielsweise eine Kupferbahn eingearbeitet ist. Daneben könnte jedoch auch die Stromschiene selbst aus Kupfer bestehen und beispielsweise zwei Zuführungen für Strom ermöglichen. Weiterhin könnte diese Stromzuführungseinrichtung bzw. Stromschiene aus einem Material wie einem Blech so gekantet sein, dass sie selbsttragend ist. Bevorzugt ist die Stromführungseinrichtung umlaufend ausgebildet.

Auch wäre es möglich, dass eine entsprechende Blechstromschiene so gekantet ist, dass sie in einen Kunststoffträger, beispielsweise in ein Kunststoffbett, eingebaut werden kann. Bevorzugt ist daher die besagte Stromschiene in einen Kunststoffträger eingebaut und insbesondere eingebettet. Es wäre nunmehr möglich, dass die Vorrichtung wenigstens einen Stromaufnehmer aufweist, der in Betrieb in permanenten Kontakt mit der Stromschiene bzw. deren leitenden Elementen ist. Auch wäre es möglich, dass insbesondere bei großen Heizeinrichtungen mehrere derartige Stromaufnehmer vorhanden sind.

Bei einer weiteren vorteilhaften Ausführungsform ist die Stromzuführungseinrichtung oberhalb des Transportmittels, beispielsweise oberhalb der Kettenglieder angeordnet. Daneben wäre es auch möglich, dass sich die Stromzuführungseinrichtung hinter den Kettengliedern bzw. hinter der Transporteinrichtung befindet, bzw. innerhalb des Umlaufpfades des Transportmittels ist. Auf diese Weise behindert die Stromzuführungseinrichtung im Arbeitsbetrieb wenig. Weiterhin wäre es möglich, dass an wenigstens einem Element des Transportmittels etwa an einem Kettenglied ein Halteelement zum Kontaktieren der Stromführungseinrichtung, insbesondere während der Bewegung der Halteelemente vorgesehen ist. Dabei ist bevorzugt ein Federelement vorgesehen, welche die Kontaktmittel in Richtung der Stromaufnahmeeinrichtung vorspannt.

Weiterhin wäre es möglich, dass für die Stromzuführung bereits vorhandene Strukturen genutzt bzw. Stromführungselemente genutzt werden. So kann die Stromzuführung in einem

Bereich erfolgen, in dem auch etwa die Antriebsenergie oder die Steuersignale für den Decoder übertragen werden. Daneben wäre es auch möglich, dass solche (Strom)Leitungseinrichtungen verwendet werden, welche zur Übertragung der Antriebsenergie und/oder der Steuersignale dienen.

Bei einer weiteren vorteilhaften Ausführungsform sind die Antriebseinrichtungen derart gestaltet und oder gesteuert, dass sie eine Drehbewegung der Kunststoffvorformlinge mit sich ändernden Drehgeschwindigkeiten ermöglichen. Bevorzugt weist jede einzelne Antriebseinrichtung auch eine Steuereinrichtung zum Steuern einer Drehgeschwindigkeit der Kunststoffvorformlinge auf. Bevorzugt erlaubt die Steuereinrichtung eine periodische Veränderung der Drehgeschwindigkeit der Kunststoffvorformlinge.

Bei einer weiteren vorteilhaften Ausführungsform weist die Vorrichtung auch wenigstens eine Drehstellungserfassungseinrichtung auf, welche eine Drehstellung der Kunststoffvorformlinge bezüglich deren Längsrichtung erfasst. Bevorzugt wird eine Drehgeschwindigkeit in Abhängigkeit von dieser Drehstellung gesteuert. Auf diese Weise kann in einer Umfangsrichtung der Kunststoffvorformlinge ein Temperaturprofil der Erwärmung erzeugt werden. So wäre es beispielsweise möglich, dass die Kunststoffvorformlinge zunächst eine Vierteldrehung mit einer ersten Drehgeschwindigkeit gedreht werden, dann eine Vierteildrehung mit einer zweiten Geschwindigkeit, dann eine weitere Vierteldrehung wieder mit der ersten Geschwindigkeit und schließlich eine weitere Vierteldrehung mit der zweiten Drehgeschwindigkeit. Dabei könnte die zweite Drehgeschwindigkeit größer sein als die erste Drehgeschwindigkeit. Auch wäre es möglich, dass diese Drehgeschwindigkeit kontinuierlich geändert wird.

Die vorliegende Erfindung ist weiterhin auf ein Verfahren zum Erwärmen von Kunststoffvorformlingen nach Anspruch 7 gerichtet. Dabei sind die Kunststoffvorformlinge jeweils an Halteelementen angeordnet und werden während ihrer Erwärmung wenigstens zeitweise bezüglich ihrer Längsrichtung bewegt und insbesondere gedreht und/oder (insbesondere geradlinig) verschoben.

Dabei werden die Kunststoffvorformlinge mittel elektromotorischer Antriebe gedreht. Bevorzugt werden die Kunststoffvorformlinge während ihrer Erwärmung auch wenigstens zeitweise gekühlt und insbesondere an ihren Oberflächen gekühlt. Dies kann beispielsweise durch Beaufschlagung mit einem Kühlmedium, wie insbesondere Kühlluft, erfolgen. Weiterhin werden bevorzugt auch weitere Bestandteile einer entsprechenden Vorrichtung gekühlt, wie insbesondere Antriebseinrichtungen und insbesondere die genannten elektromotorischen Antriebe.

Bei einem weiteren bevorzugten Verfahren werden Halteelemente (oder zumindest Bestandteile der Halteeinrichtungen wie der oben erwähnte Rotor und/oder der Haltedorn) zum Halten der Kunststoffvorformlinge wenigstens zeitweise auch entlang ihrer Längsrichtung (welche aber auch eine Längsachse der Kunststoffvorformlinge sein kann) bewegt. Dies erfolgt dabei insbesondere zum Einführen dieser Halteelemente in die Kunststoffvorformlinge und/oder auch wieder zum Abziehen der Halteelemente aus den Kunststoffvorformlingen. Bevorzugt werden die Kunststoffvorformlinge bezüglich ihrer Längsrichtung ohne Verwendung von (insbesondere stationären) Führungskurven gedreht. Bevorzugt erfolgt auch eine Bewegung des die Kunststoffvorformlinge haltenden Haltelementes ohne Verwendung (stationärer) Führungskurven.

Bei einem weiteren bevorzugten Verfahren wird die Drehstellung wenigstens eines Halteelements, genauer eines Haltemittels, welches Bestandteil einer Halteeinrichtung ist wie etwa ein Haltedorn, bezüglich der Längsrichtung der Kunststoffvorformlinge wenigstens zeitweise erfasst. Vorteilhaft werden die Antriebseinrichtungen in Abhängigkeit von dieser erfassten Drehstellung gesteuert.

Bei einem weiteren vorteilhaften Verfahren wird die Drehgeschwindigkeit der Kunststoffvorformlinge wenigstens zeitweise verändert. Insbesondere wird die Drehgeschwindigkeit wenigstens zeitweise während des Erwärmungsvorgangs verändert. So wäre es möglich, dass die Drehgeschwindigkeit periodisch verändert wird. Besonders bevorzugt wird die Drehgeschwindigkeit auch in Abhängigkeit von einer Drehstellung der Kunststoffvorformlinge verändert.

Bevorzugt wird die Drehgeschwindigkeit der Kunststoffvorformlinge verändert, um so ein Temperaturprofil hinsichtlich der Wandung der Kunststoffvorformlinge in der Umfangsrichtung der Kunststoffvorformlinge zu erzeugen. Dieser Vorgang kann auch als preferential heating bezeichnet werden. Mittels eines derartigen Temperaturprofils können in der Folge leichter Kunststoffbehältnisse mit einem von einem kreisförmigen Querschnitt abweichenden Querschnitt erzeugt werden, etwa Behältnisse mit einem elliptischen Querschnitt. Bevorzugt werden im Anschluss an den Erwärmungsvorgang Behältnisse mit einem von einem kreisförmigen Querschnitt abweichenden Querschnitt erzeugt.

Weitere Vorteile und Ausführungsformen ergeben sich aus den beigefügten Zeichnungen. Darin zeigen:
- Fig. 1: eine Darstellung einer Vorrichtung zum Erwärmen von Kunststoffvorformlingen;
- Fig. 2: eine Darstellung einer einzelnen Halteeinrichtung zum Halten der Kunststoffvorformlinge;
- Fig. 3: eine schematische Draufsicht auf die Halteeinrichtung aus Fig. 2;
- Fig. 4: eine schematische Draufsicht auf die Vorrichtung aus Fig. 1;
- Fig. 5: eine schematische Darstellung zur Veranschaulichung der Ansteuerung;
- Fig. 6: eine weitere schematische Darstellung zur Veranschaulichung einer Halteeinrichtung; und
- Fig. 7: eine weitere Darstellung einer erfindungsgemäßen Halteeinrichtung.

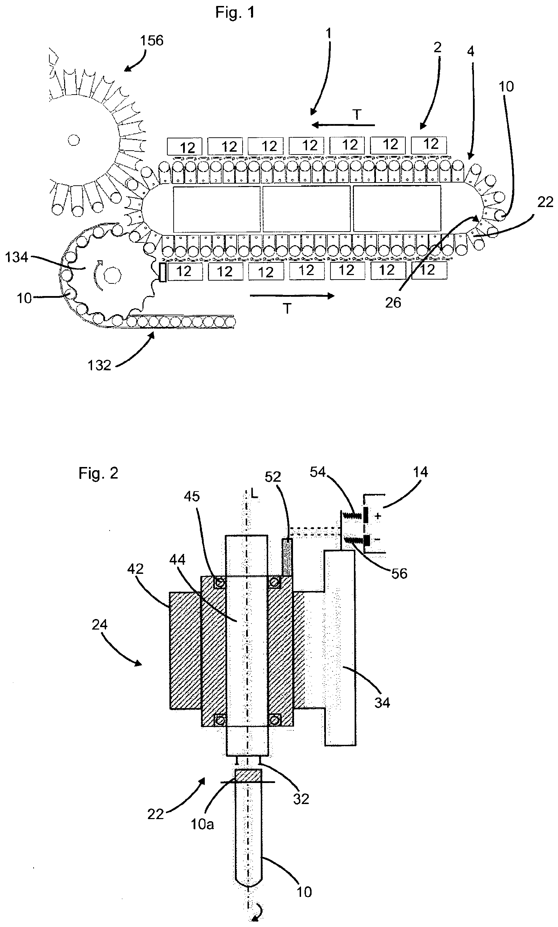

Figur 1 zeigt eine schematische Darstellung einer Vorrichtung 1 zum Erwärmen von Kunststoffvorformlingen 10. Dabei werden die Kunststoffvorformlinge über eine Zuführeinrichtung 132 wie eine Zuführschiene zunächst einem Eintaktrad bzw. einer Vereinzelungseinrichtung 134 zugeführt. Ausgehend von dieser Vereinzelungseinrichtung 134 werden die Kunststoffvorformlinge dem eigentlichen Linearofen zugeführt. Dieser Linearofen weist dabei eine Transporteinrichtung 2 auf, welche wiederum ein umlaufendes Transportmittel, wie eine Transportkette 26 aufweist, an der eine Vielzahl von Halteeinrichtungen 22 angeordnet ist. Diese Halteeinrichtungen 22 dienen dabei jeweils zum Halten der einzelnen Kunststoffvorformlinge. Die Halteeinrichtungen 22 weisen dabei jeweils Halteelemente 32 (Fig. 2) auf, die hier als Haltedorne ausgebildet sind, welche in die Mündungen der Kunststoffvorformlinge eingreifen.

Das Bezugszeichen T kennzeichnet einen Transportpfad der Kunststoffvorformlinge. Entlang dieses Transportpfades T ist erfindungsgemäß eine Vielzahl von Heizeinrichtungen 12 bzw. Erwärmungseinrichtungen angeordnet, welche zum Erwärmen der Kunststoffvorformlinge dienen. Weiterhin ist vorgesehen, dass die einzelnen Kunststoffvorformlinge 10 um ihre Längsachse, welche hier senkrecht zur Figurenebene in Figur 1 steht, drehbar sind.

Das Bezugszeichen 156 bezieht sich auf eine Transporteinrichtung, welche die so erwärmten Kunststoffvorformlinge an eine (nicht mehr gezeigte) Umformungseinrichtung zum Umformen der Kunststoffvorformlinge zu Kunststoffbehältnissen übergibt.

Figur 2 zeigt eine Detailansicht einer Halteeinrichtung 22. Hier ist wieder der Kunststoffvorformling 10 dargestellt, der mittels eines Haltedorns 32, der in seine Mündung 10a eingeführt wird, gehalten wird.

Das Bezugszeichen 24 kennzeichnet in seiner Gesamtheit eine Antriebseinrichtung (wie insbesondere einen Elektromotor), welche hier die Drehung des Kunststoffvorformlings 10 bezüglich seiner Längsachse L bewirkt. Diese Antriebseinrichtung 24 weist dabei einen Stator 42 auf, der an einem Kettenglied 34 angeordnet ist. Drehbar bezüglich dieses Stators 42 ist ein Rotor 44 vorgesehen, an dem wiederum ein Haltedorn 32, welcher in die Mündung der Kunststoffvorformlinge einführbar ist, fest angeordnet ist. Das Bezugszeichen 45 bezieht sich auf Lagereinrichtungen, welche zur drehbaren Lagerung des Rotors 44 dienen.

Das Bezugszeichen 14 bezieht sich auf eine Stromzuführungseinrichtung, wie eine Stromschiene, welche die Antriebseinrichtung 24 mit Strom versorgt. Zu diesem Falle weist die Antriebseinrichtung 24 Schleifkontakte 54, 56 auf, die an dieser Stromschiene 14 bzw. den jeweiligen Kontaktstreifen entlanggleiten. Das Bezugszeichen 52 bezieht sich auf einen Digitaldecoder, mit dem insbesondere eine Drehstellung des Rotors der Antriebseinrichtung 24 erfasst werden kann, ggfs. jedoch auch eine Stellung in der Längsrichtung der Kunststoffvorformlinge 10.

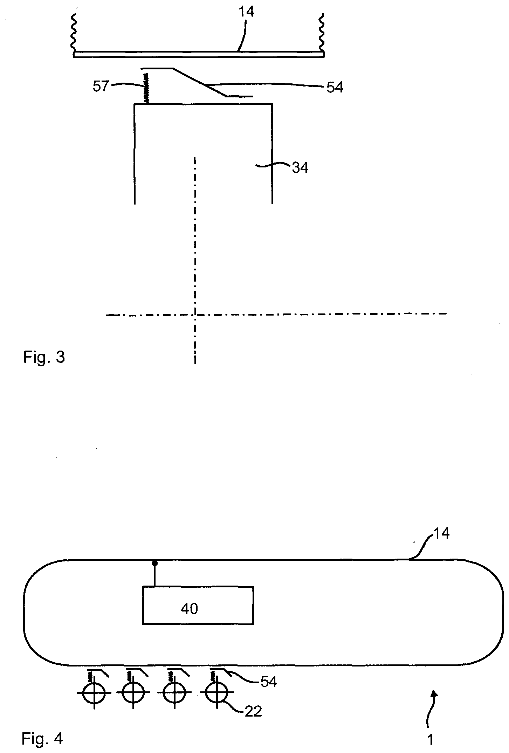

Figur 3 zeigt eine Draufsicht auf die in Figur 2 gezeigte Vorrichtung. Man erkennt, dass hier neben den Kontaktelementen 56 auch Vorspanneinrichtungen 57 vorgesehen sind, welche die Kontaktelemente auf die Stromzuführungseinrichtung 14 zuspannen. Auf diese Weise kann ein zuverlässiger Stromfluss zur Versorgung der Antriebseinrichtung gewährleistet werden.

Figur 4 zeigt eine weitere Darstellung einer Vorrichtung 1 zum Erwärmen von Kunststoffvorformlingen. Hier ist wieder die umlaufende Stromzuführungsschiene 14 dargestellt, sowie auch eine Steuerungseinrichtung 40, welche die Stromzufuhr an die einzelnen Antriebseinrichtungen 24 steuert. Dabei ist es möglich, dass die Antriebseinrichtungen der einzelnen Halteelemente individuell angesteuert werden. Es ist auch denkbar, dass jede Antriebseinrichtung der Halteelemente eine eigene Steuerungseinrichtung aufweist. Bevorzugt wird jedoch nur eine Steuerungseinrichtung vorgesehen, die alle Antriebseinrichtungen der Halteelemente steuert.

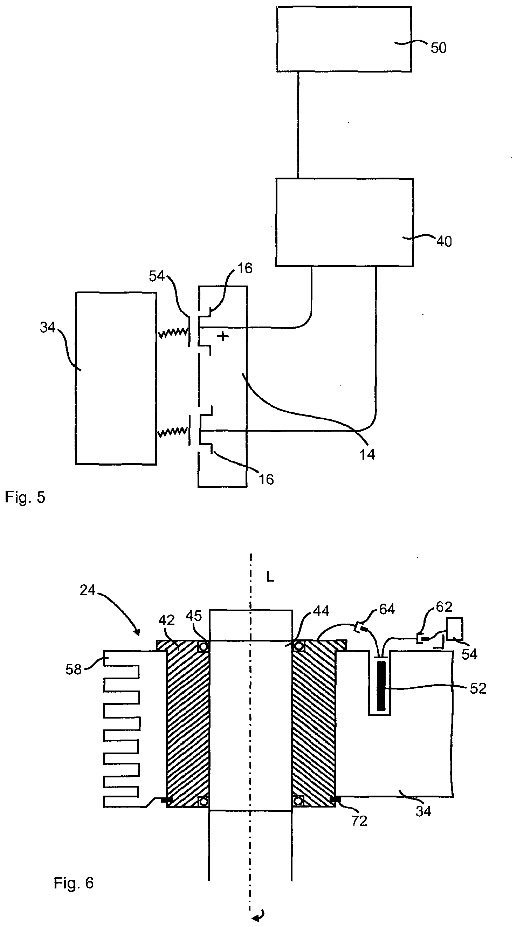

Figur 5 zeigt eine Darstellung zur Veranschaulichung der Ansteuerung der Antriebseinrichtung. Dabei ist eine Steuerungseinrichtung 40 vorgesehen, welche der Steuerung der Antriebseinrichtungen dient. Diese Steuerungseinrichtung 40 kann wiederum von einer übergeordneten Maschinensteuerung 50 angesteuert werden. Die Stromzuführungseinrichtung 14 weist hier zwei Stromschienen 16 auf, die hier zur Zuführung des Plus- und Minus-Kontakts dienen. Diese Stromschienen bzw. die Stromzuführungseinrichtung 14 sind hier feststehend ausgebildet und die einzelnen Kettenglieder 34, an denen die Halteeinrichtungen 22 und damit auch die Halteelemente angeordnet sind, bewegen sich relativ hierzu.

Figur 6 zeigt eine weitere Darstellung einer erfindungsgemäßen Halteeinrichtung. Man erkennt hier wieder das Kettenglied 34, welches eine Ausnehmung ausbildet, in der die Digitaldecodereinrichtung 52 angeordnet ist. Dabei sind Steckkontakte bzw. Steckerbuchsenkombinationen 62 und 64 vorgesehen, um die Verbindungen zu der Antriebseinrichtung bzw. auch zu dem Schleifkontakt 54 zu lösen.

Das Bezugszeichen 45 bezieht sich wieder auf Lagereinrichtungen. Weiterhin sind Kühleinrichtungen 58 bzw. Kühlrippen vorgesehen, welche hier eine Kühlung der Antriebseinrichtung 24 bzw. des Stators 42 und des Rotors 44 ermöglichen. Die Kühlung wird hier durch die Relativbewegung der einzelnen Kettenglieder 34 erreicht. Damit sind bei dieser Ausführungsform Kühlrippen an dem Kettenglied 34 angeordnet.

Der Stator 42 kann durch Lösen des Steckkontakts 64 und durch Lösen eines Sicherungsringes 72 demontiert werden. Die Digitaldecodereinrichtung 52 ist hier vorteilhaft in eine Ausnehmung des Kettengliedes eingegossen bzw. allgemein in den Stator 42 eingebaut.

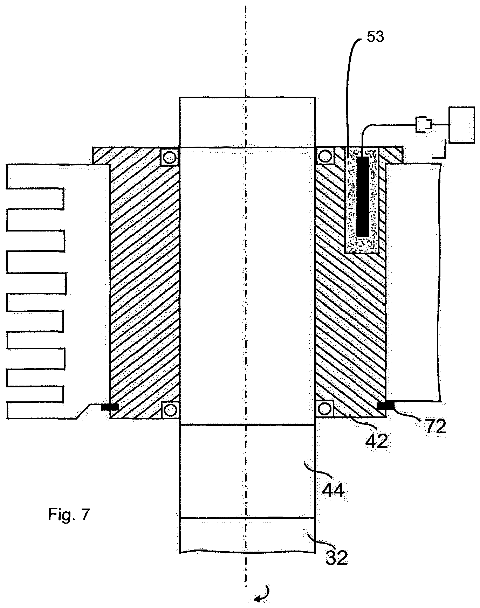

Figur 7 zeigt schließlich eine weitere Ausführungsform einer erfindungsgemäßen Halteeinrichtung. Auch hier ist wieder ein Digitaldecoder 52 erkennbar, der über eine Steckverbindung mit dem Schleifkontakt 54 verbunden ist. Bei dieser Ausgestaltung ist der Digitaldecoder 52 in den Stator 42 der Antriebseinrichtung 40 eingebaut. Der Stator kann hier durch ein Lösen des Steckkontakts 62 demontiert werden. Das Bezugszeichen 53 bezieht sich auf einen Füllkörper wie etwa eine Kunststoffmasse, mit welcher der Digitaldecoder 52 in der Ausnehmung befestigt ist.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- L: Längsrichtung
- T: Transportpfad
- P: Transportpfad
- 1: Vorrichtung
- 2: Transporteinrichtung
- 10: Kunststoffvorformling
- 10a: Mündung
- 14: Stromzuführungsschiene
- 12: Heizeinrichtungen/Erwärmungseinrichtung
- 16: Stromschienen
- 22: Halteeinrichtungen
- 26: Transportkette
- 30: Kühlungseinrichtung
- 32: Halteelement, Haltedorn
- 34: Kettenglied
- 40: Steuerungseinrichtung
- 42: Stator
- 44: Rotor
- 45: Lagereinrichtungen
- 52: Digitaldecodereinrichtung
- 52: Fülkörper
- 54: Schleifkontakt
- 56: Schleifkontakt
- 62: Steckkontakte/Steckerbuchsenkombinationen
- 64: Steckkontakte/Steckerbuchsenkombinationen
- 72: Sicherungsring
- 124: Antriebseinrichtung
- 132: Zuführeinrichtung
- 134: Eintaktrad/Vereinzelungseinrichtung
- 156: Transporteinrichtung

## Patentansprüche

1. Vorrichtung (1) zum Erwärmen von Kunststoffvorformlingen (10) mit einer Transporteinrichtung (2), welche die Kunststoffvorformlinge (10) entlang eines vorgegebenen Transportpfades transportiert, wobei entlang dieses Transportpfades eine Vielzahl von Heizeinrichtungen bzw. Erwärmungseinrichtungen angeordnet ist, welche zum Erwärmen der Kunststoffvorformlinge dienen und wobei die Transporteinrichtung (2) ein umlaufendes Transportmittel (26) aufweist und an diesem Transportmittel (2) eine Vielzahl von Halteelementen (32) zum Halten der Kunststoffvorformlinge (10) angeordnet ist und diese Halteelemente (32) bezüglich einer Längsrichtung (L) der während ihrer Erwärmung zu drehenden Kunststoffvorformlinge bewegbar sind,
**dadurch gekennzeichnet, dass**
den Halteelementen (32) jeweils unabhängig voneinander steuerbare Antriebseinrichtungen (24) zugeordnet sind, welche zumindest auch die während der Erwärmung erfolgende Drehbewegung der Kunststoffvorformlinge (10) bezüglich deren Längsrichtung bewirken, und wobei die Antriebseinrichtungen (24) auch eine Bewegung der Halteelemente (32) in deren Längsrichtung (L) durchführen.

2. Vorrichtung (1) nach Anspruch 1,
**dadurch gekennzeichnet, dass**
die Antriebseinrichtungen (24) jeweils Elektromotoren aufweisen.

3. Vorrichtung (1) nach wenigstens einem der vorangegangenen Ansprüche,
**dadurch gekennzeichnet, dass**
die Vorrichtung (1) eine Kühleinrichtung (58) zum Kühlen des Transportmittels und/oder der Antriebseinrichtungen (24) aufweist.

4. Vorrichtung (1) nach wenigstens einem der vorangegangenen Ansprüche,
**dadurch gekennzeichnet, dass**
das Transportmittel (26) eine Transportkette ist.

5. Vorrichtung (1) nach wenigstens einem der vorangegangenen Ansprüche,
**dadurch gekennzeichnet, dass**
jede Antriebseinrichtung (24) einen Digital-Decoder (52) aufweist.

6. Vorrichtung (1) nach wenigstens einem der vorangegangenen Ansprüche,
**dadurch gekennzeichnet, dass**
die Vorrichtung (1) eine stationär angeordnete Stromzuführungseinrichtung (14) aufweist, welche die Antriebseinrichtungen (24) wenigstens zeitweise mit elektrischer Energie versorgt.

7. Verfahren zum Erwärmen von Kunststoffvorformlingen (10), wobei die Kunststoffvorformlinge (10) mit wenigstens einem umlaufenden Transportmittel (26) entlang eines vorgegebenen Transportpfades (P) transportiert und während dieses Transports erwärmt werden, wobei entlang dieses Transportpfades eine Vielzahl von Heizeinrichtungen bzw. Erwärmungseinrichtungen angeordnet ist, welche zum Erwärmen der Kunststoffvorformlinge dienen und wobei die Kunststoffvorformlinge (10) jeweils an Haltelementen (32) angeordnet sind während ihrer Erwärmung wenigstens zeitweise bezüglich ihrer Längsrichtung (L) bewegt werden,
**dadurch gekennzeichnet, dass**
die Kunststoffvorformlinge (10) mittels elektromotorischer Antriebseinrichtungen (24) während ihrer Erwärmung gedreht werden, und wobei die Antriebseinrichtungen (24) auch eine Bewegung der Halteelemente (32) in deren Längsrichtung (L) durchführen.

8. Verfahren nach Anspruch 7,
**dadurch gekennzeichnet, dass**
Halteelemente (32) zum Halten der Kunststoffvorformlinge (10) auch wenigstens zeitweise entlang ihrer Längsrichtung bewegt werden.

9. Verfahren nach wenigstens einem der vorangegangenen Ansprüche,
**dadurch gekennzeichnet, dass**
die Drehstellung wenigstens eines Halteelements (32) bezüglich der Längsrichtung (L) wenigstens zeitweise erfasst wird.

10. Verfahren nach wenigstens einem der vorangegangenen Ansprüche,
**dadurch gekennzeichnet, dass**
die Drehgeschwindigkeit der Kunststoffvorformlinge wenigstens zeitweise verändert wird.

## Claims

1. An apparatus (1) for the heating of plastics material pre-forms (10) with a conveying device (2) which conveys the plastics material pre-forms (10) along a pre-set conveying path, wherein a plurality of heating devices or warming devices are arranged along this transport path, which are used for heating the plastic pre-forms and wherein the conveying device (2) has a circulating conveying means (26), and a plurality of holding elements (32) for holding the plastics material preforms (10) are arranged on this conveying means (2), and these holding elements (32) are movable with respect to a longitudinal direction (L) of the plastics material pre-forms to be rotated during heating thereof,
**characterized in that**
the holding elements (32) have associated with them in each case drive devices (24) which are controllable independently of one another and which produce at least also the rotational movement which takes place during the heating of the plastics material pre-forms (10) with respect to the longitudinal direction thereof and wherein the drive devices (24) also perform a movement of the holding elements (32) in the longitudinal direction (L) thereof.

2. An apparatus (1) according to claim 1,
**characterized in that**
the drive devices (24) have in each case electric motors.

3. An apparatus (1) according to at least one of the preceding claims,
**characterized in that**
the apparatus (1) has a cooling device (58) for cooling the conveying means and/or the drive devices (24).

4. An apparatus (1) according to at least one of the preceding claims,
**characterized in that**
the conveying means (26) is a conveying chain.

5. An apparatus (1) according to at least one of the preceding claims,
**characterized in that**
each drive device (24) has a digital decoder (52).

6. An apparatus (1) according to at least one of the preceding claims,
**characterized in that**
the apparatus (1) has a current supply device (14) which is arranged stationary and which supplies the drive devices (24) with electrical energy at least for a time.

7. A method of heating plastics material pre-forms (10), wherein the plastics material pre-forms (10) are conveyed along a pre-set conveying path (P) by at least one circulating conveying means (26) and are heated during this conveying, wherein a plurality of heating devices or warming devices are arranged along this transport path which are used to heating the plastic preforms and wherein the plastics material preforms (10) are arranged in each case on holding elements (32) and during their heating they are moved with respect to their longitudinal direction (L) at least for a time,
**characterized in that**
the plastics material pre-forms (10) are turned during the heating thereof by means of electric motor drives (24), and wherein the drive devices (24) also perform a movement of the holding elements (32) in longitudinal direction (L) thereof.

8. A method according to claim 7,
**characterized in that**
holding elements (32) for holding the plastics material pre-forms (10) are also moved at least for a time along their longitudinal direction.

9. A method according to at least one of the preceding claims,
**characterized in that**
the rotary position of at least one holding element (32) with respect to the longitudinal direction (L) is detected at least for a time.

10. A method according to at least one of the preceding claims,
**characterized in that**
the rotational speed of the plastic preforms is altered at least for a time.

## Revendications

1. Dispositif (1) de chauffage d'ébauches en matière plastique (10), comprenant un système de transport (2), lequel transporte les ébauches en matière plastique (10) le long d'un trajet de transport prédéfini, dans lequel une pluralité de dispositifs de chauffage qui sont utilisés pour chauffer les préformes en plastique est agencée le long de ce trajet de transport et dans lequel le système de transport (2) comprend un moyen de transport (26) rotatif et une pluralité d'éléments de retenue (32) destinés à retenir les ébauches en matière plastique (10) étant agencés sur ce moyen de transport (26) et lesdits éléments de retenue (32) pouvant être déplacés par rapport à une direction longitudinale (L) des ébauches en matière plastique à pivoter pendant leur chauffage,
**caractérisé en ce que**
des systèmes d'entraînement (24) sont associés aux éléments de retenue (32), lesquels peuvent être commandés chacun indépendamment les uns des autres et provoquent également au moins le mouvement rotatif des ébauches en matière plastique (10) pendant le chauffage par rapport à la direction longitudinale de ces dernières, et dans lequel les systèmes d'entraînement (24) effectuent également un mouvement des éléments de retenue (32) dans la direction longitudinale (L) de ces derniers.

2. Dispositif (1) selon la revendication 1,
**caractérisé en ce que**
les systèmes d'entraînement (24) comprennent des moteurs électriques respectifs.

3. Dispositif (1) selon au moins l'une des revendications précédentes,
**caractérisé en ce que**
le dispositif (1) comprend un système de refroidissement (58) destiné à refroidir le moyen de transport et/ou les systèmes d'entraînement (24).

4. Dispositif (1) selon au moins l'une des revendications précédentes,
**caractérisé en ce que**
le moyen de transport (26) est une chaîne de transport.

5. Dispositif (1) selon au moins l'une des revendications précédentes,
**caractérisé en ce que**
chaque système d'entraînement (24) comprend un décodeur numérique (52).

6. Dispositif (1) selon au moins l'une des revendications précédentes,
**caractérisé en ce que**
le dispositif (1) comprend un système d'alimentation en courant (14) monté fixe, lequel alimente au moins par intermittence les systèmes d'entraînement (24) en énergie électrique.

7. Procédé de chauffage d'ébauches en matière plastique (10), dans lequel les ébauches en matière plastique (10) étant transportées au moyen d'au moins un moyen de transport (26) rotatif le long d'un trajet de transport (P) prédéfini et étant chauffées pendant ce transport, dans lequel une pluralité de dispositifs de chauffage qui sont utilisés pour chauffer les préformes en plastique est agencée le long de ce trajet de transport et dans lequel les ébauches en matière plastique (10) étant agencées sur des éléments de retenue (32) respectifs et étant déplacées au moins par intermittence par rapport à leur direction longitudinale (L) pendant leur chauffage,
**caractérisé en ce que**
les ébauches en matière plastique (10) sont amenées en rotation au moyen de systèmes d'entraînement électromoteurs (24) pendant leur chauffage, et dans lequel les systèmes d'entraînement (24) provoquent également un mouvement des éléments de retenue (32) dans la direction longitudinale (L) de ces derniers.

8. Procédé selon la revendication 7,
**caractérisé en ce que**
les éléments de retenue (32) destinés à retenir les ébauches en matière plastique (10) sont déplacés également au moins par intermittence le long de leur direction longitudinale.

9. Procédé selon au moins l'une des revendications précédentes,
**caractérisé en ce que**
la position en rotation d'au moins un élément de retenue (32) par rapport à la direction longitudinale (L) est détectée au moins par intermittence.

10. Procédé selon au moins l'une des revendications précédentes,
**caractérisé en ce que**
la vitesse de rotation des ébauches en matière plastique est modifiée au moins par intermittence.
